# EUROPÄISCHE PATENTANMELDUNG

(11) **EP 4 497 994 A1**
(43) Veröffentlichungstag der Anmeldung: **29.01.2025**
(21) Anmeldenummer: 23188160.8
(22) Anmeldetag: 27.07.2023
(51) Int. Cl.: F21S 41/43, F21S 41/13, F21S 41/143, F21S 41/19, F21S 41/14, F21S 41/663, F21S 45/10, B60Q 1/00, B60Q 1/04

(54) **SCHEINWERFER FÜR EIN FAHRZEUG**

(71) Anmelder: Diederich, Rainer, 51580 Reichshof-Denklingen (DE)
(72) Erfinder: Diederich, Rainer, 51580 Reichshof-Denklingen (DE)
(74) Vertreter: dompatent von Kreisler Selting Werner - Partnerschaft von Patent- und Rechtsanwälten mbB

(57) **Zusammenfassung**

Der Scheinwerfer (10) für ein Fahrzeug ist versehen mit einem Gehäuse (12), das eine Vorderseite (16) zur wahlweisen Abgabe von Licht unterschiedlicher Arten aufweist, einer Leiterplatte (20) und drei Gruppen von Lichtquellen (24, 26, 28), die auf der Leiterplatte (20) angeordnet sind. Eine erste und eine zweite Gruppe von Lichtquellen (24, 26) sind in einem ersten Bereich der Leiterplatte (20) und eine dritte Gruppe von Lichtquellen (28) ist in einem zum ersten Bereich benachbarten zweiten Bereich der Leiterplatte (20) angeordnet. Eine Blende (30) innerhalb des Gehäuses (12) weist zwei Blendenöffnungen (38, 40) auf. Eine erste Blendenöffnung (38) ist den jeweils mindestens einen Lichtquellen (24, 26) der ersten und der zweiten Gruppe zugeordnet, deren Licht durch die erste Blendenöffnung (38) gelangt und austritt. Eine zweite Blendenöffnung (40) ist der mindestens einen Lichtquelle (28) der dritten Gruppe zugeordnet, deren Licht durch die zweite Blendenöffnung (40) gelangt und austritt. Eine Lichtabschottungswand (36) unterteilt den Raum des Gehäuses (12) zwischen der Leiterplatte (20) und der Blende (30) in einen ersten Teilraum, in dem die jeweils mindestens einen Lichtquellen (24, 26) der ersten und der zweiten Gruppe sowie die erste Blendenöffnung (38) angeordnet sind, und in einen zweiten Teilraum, in dem die mindestens eine Lichtquelle (28) der dritten Gruppe und die zweite Blendenöffnung (40) angeordnet sind.

## Beschreibung

Die Erfindung betrifft einen Scheinwerfer für ein Fahrzeug, insbesondere für ein Quad oder für einen Geländewagen oder für einen Motorschlitten sowie für sämtliche Arten von militärischen Fahrzeugen, ob gepanzert oder ungepanzert.

Scheinwerfer für Fahrzeuge sind im Allgemeinen in zahlreichen Ausführungsformen bekannt. Während die meisten Fahrzeugscheinwerfer im sichtbaren Wellenlängenbereich arbeiten, sind bei bestimmten Anwendungen Infrarot-Scheinwerfer von besonderem Interesse. Beispielsweise können Infrarot-Scheinwerfer bei Fahrzeugen eingesetzt werden, um in Kombination mit einem Nachtsichtgerät die Fahrbahn und darauf befindliche Objekte auch bei Dunkelheit erkennen zu können. Solche Systeme, die Infrarot-Licht abgeben, können insbesondere für Jäger hilfreich sein, die bei Dunkelheit auf die Jagd gehen, oder aber auch für Sicherheitsmitarbeiter von Interesse sein, die bei Dunkelheit ein Gelände oder etwa ein Objekt zu überwachen haben.

Von besonderem Interesse ist es, wenn ein Fahrzeugscheinwerfer, der Licht im sichtbaren Wellenlängenbereich abgibt, wahlweise auch Licht im unsichtbaren Wellenlängenbereich abgeben kann, und zwar letzteres, wie bei der Abgabe von Licht im sichtbaren Wellenlängenbereich wahlweise als sowohl Abblendlicht als auch Fernlicht. Derartige Fahrzeugscheinwerfer würden also mehrere Gruppen von Lichtquellen aufweisen, die unterschiedliches Licht, also erstes und zweites Licht als Abblendlicht und ferner als Fernlicht abgeben würden.

Ein Fahrzeugscheinwerfer der zuvor genannten Art ist beispielsweise aus EP 3 702 666 A1 bekannt.

Aufgabe der Erfindung ist es, einen Fahrzeugscheinwerfer für die Abgabe von Licht wahlweise in einer von drei Arten abzugeben, wobei sich die Abgabe des unterschiedlichen Lichts hinsichtlich verschiedener Parameter, wie beispielsweise Wellenlänge bzw. Wellenlängenspektrum, Polarisation, Beleuchtungsreichweite und/oder Beleuchtungswinkel unterscheidet und der Scheinwerfer dennoch einen einfachen Aufbau aufweist.

Zur Lösung dieser Aufgabe wird mit der Erfindung Scheinwerfer für ein Fahrzeug vorgeschlagen, der versehen ist mit
- einem Gehäuse, das eine Vorderseite zur wahlweisen Abgabe von Licht unterschiedlicher Arten aufweist,
- einer einstückigen Leiterplatte, die innerhalb des Gehäuses angeordnet ist,
- drei Gruppen von Lichtquellen, die auf der Leiterplatte angeordnet sind, wobei jede Gruppe mindestens eine Lichtquelle aufweist,
- wobei eine erste und eine zweite Gruppe von Lichtquellen in einem ersten Bereich der Leiterplatte und eine dritte Gruppe von Lichtquellen in einem zum ersten Bereich benachbarten zweiten Bereich der Leiterplatte angeordnet sind,
- einer Blende, die innerhalb des Gehäuses zwischen der Leiterplatte und der Vorderseite des Gehäuses angeordnet ist und zwei Blendenöffnungen aufweist,
- wobei eine erste Blendenöffnung den jeweils mindestens einen Lichtquellen der ersten und der zweiten Gruppe zugeordnet ist, deren Licht durch die erste Blendenöffnung gelangt und austritt,
- wobei eine zweite Blendenöffnung der mindestens einen Lichtquelle der dritten Gruppe zugeordnet ist, deren Licht durch die zweite Blendenöffnung gelangt und austritt, und
- einer Lichtabschottungswand, die den Raum des Gehäuses zwischen der Leiterplatte und der Blende in einen ersten Teilraum, in dem die jeweils mindestens einen Lichtquellen der ersten und der zweiten Gruppe sowie die erste Blendenöffnung angeordnet sind, und einen zweiten Teilraum unterteilt, in dem die mindestens eine Lichtquelle der dritten Gruppe und die zweite Blendenöffnung angeordnet sind.

Der erfindungsgemäße Scheinwerfer weist ein Gehäuse auf, das eine Vorderseite zur wahlweisen Abgabe von Licht unterschiedlicher Arten, wie oben gemäß Aufgabe beschrieben, aufweist. Innerhalb des Gehäuses befinden sich drei Gruppen von Lichtquellen, die sämtlich auf einer einzigen einstückigen Leiterplatte angeordnet sind. Jede Gruppe von Lichtquellen weist zumindest eine Lichtquelle auf. Eine erste Gruppe von Lichtquellen sowie eine zweite Gruppe von Lichtquellen sind in einem ersten Bereich der Leiterplatte angeordnet, während sich die dritte Gruppe von Lichtquellen in einem zum ersten Bereich der Leiterplatte benachbarten zweiten Bereich befindet. Die von den Lichtquellen abgegebenen Lichtkegel, deren größten insbesondere von der Bauart der Lichtquellen, bei denen es sich vorzugsweise um LEDs handelt, abhängen, werden durch erste und zweite (Blenden-)Öffnungen einer Blende "abgeschnitten", die innerhalb des Gehäuses zwischen der Leiterplatte und der Vorderseite des Gehäuses angeordnet ist. Die erste Blendenöffnung ist den jeweils mindestens einen Lichtquellen der ersten und der zweiten Gruppe zugeordnet, deren Licht also durch die erste Blendenöffnung gelangt und austritt. Die zweite Blendenöffnung ist der mindestens einen Lichtquelle der dritten Gruppe zugeordnet. Ihr Licht tritt durch die zweite Blendenöffnung aus. Die Größe der Blendenöffnungen und deren Anordnung an der Blende sind derart gewählt, dass Licht der Lichtquellen der ersten und zweiten Gruppe durch die erste Blendenöffnung als Abblendlicht und Licht der mindestens einen Lichtquelle der dritten Gruppe durch die zweite Blendenöffnung als Fernlicht austritt. Innerhalb des Raums des Gehäuses zwischen der Leiterplatte und der Blende befindet sich eine Lichtabschottungswand, die diesen Raum des Gehäuses in einen ersten Teilraum, in dem die jeweils mindestens einen Lichtquellen der ersten und der zweiten Gruppe sowie die erste Blendenöffnung angeordnet sind, und in einen zweiten Teilraum unterteilt, in dem die mindestens eine Lichtquelle der dritten Gruppe und die zweite Blendenöffnung angeordnet sind.

Durch den Einsatz einer einzigen Leiterplatte für die Anordnung der Lichtquellen der drei Gruppen weist der erfindungsgemäße Scheinwerfer einen vereinfachten Aufbau auf. Es brauchen für die Lichtabgaben keinerlei defraktiv arbeitende optische Elemente eingesetzt zu werden. Letztendlich bedarf es auch keinerlei Reflektoren. Als Lichtquellen eignen sich vorzugsweise LEDs, die ihr Licht mit einem relativ breiten Lichtkegel abgeben. Daher bedarf es zum "Beschneiden" des austretenden Lichts erfindungsgemäß der Blende, die, ebenfalls erfindungsgemäß, zwei Blendenöffnungen für einerseits Abblendlicht und andererseits Fernlicht aufweist.

In vorteilhafter Ausgestaltung der Erfindung kann vorgesehen sein, dass die beiden Blendenöffnungen beidseitig der Lichtabschottungswand, z.B. oberhalb und unterhalb der Lichtabschottungswand angeordnet sind. Hierbei kann mit weiteren Vorteil vorgesehen sein, dass die Lichtabschottungswand von der der Leiterplatte zugewandten Innenseite der Blende absteht.

Die Integration der Lichtabschottungswand als von der Innenseite der Blende abstehende Wand reduziert die Anzahl der Bauteile und damit den Montageaufwand weiter.

Die Blendenöffnungen, ihre Größen und Anordnungen sind, wie gesagt, so ausgestaltet, dass die erste Blendenöffnung Abblendlicht und die zweite Blendenöffnung Fernlicht hindurch lässt. In Abstimmung mit der Anordnung der Lichtquellen der drei Gruppen auf der Leiterplatte ist demzufolge auch der Abstand der die Blendenöffnungen aufweisenden Platte der Blende entsprechend abzustimmen. In diesem Zusammenhang von Vorteil ist es, wenn die Blende eine die beiden Blendenöffnungen aufweisende Blendenplatte aufweist, von deren Außenrand eine umlaufende Abstandswand absteht, deren der Blendenplatte abgewandter Rand zur Vorgabe des Abstandes der Blendenplatte von den Lichtquellen der drei Gruppen an der Leiterplatte anliegt. Vom umlaufenden Rand der Blendenplatte steht eine umlaufende Umfangswand ab, die die Funktion der Einhaltung des Abstandes der Blendenöffnungen von der Leiterplatte bzw. den Lichtquellen entlang der optischen Achse definiert. Die optische Achse ist hier als im Wesentlichen orthogonal zur Leiterplatte verlaufende Hauptabstrahlrichtung für die verschiedenen Arten des Lichts zu sehen.

Wie bereits weiter oben beschrieben, betrifft ein Kriterium für den Unterschied der Lichtabgabe der Lichtquellen der drei Gruppen deren Wellenlängenbereiche. So ist beispielsweise mit Vorteil vorgesehen, dass die mindestens eine Lichtquelle der ersten Gruppe Licht im sichtbaren Wellenlängenbereich abgibt und dass die jeweils mindestens einen Lichtquellen der zweiten und der dritten Gruppe Licht im unsichtbaren Wellenlängenbereich, insbesondere im IR- und vorzugsweise im NIR-Wellenlängenbereich abgeben.

Bereits oben wurde darauf hingewiesen, dass bei dem erfindungsgemäßen Scheinwerfer mit Vorteil die jeweils mindestens einen Lichtquellen der ersten und der zweiten Gruppe durch die erste Blendenöffnung gelangendes Licht als Abblendlicht abgeben und dass die mindestens eine Lichtquelle der dritten Gruppe durch die zweite Blendenöffnung gelangendes Licht als Fernlicht abgibt.

Die optischen Wirkungen der beiden Blendenöffnungen ist, wie oben beschrieben, vorteilhafterweise dergestalt, dass sie abgestrahltes Licht der Lichtquellen der drei Gruppen zur Abgabe ausschließlich in den vor der Vorderseite des Gehäuses liegenden unteren Halbraum gelangen lassen.

In zweckmäßiger weiterer Ausgestaltung der Erfindung weist der erfindungsgemäße Scheinwerfer eine weitere Lichtabstrahlbegrenzungskante auf, die an einem Vorsprungselement ausgebildet ist, das von der Vorderseite des Gehäuses absteht, wobei es ferner zweckmäßig ist, wenn diese weitere Lichtabstrahlbegrenzungskante mit der Oberkante der ersten Blendenöffnung im Wesentlichen fluchtet. Das Vorsprungselement hat überdies die Funktion ein Steinschlagschutz, als Schmutzschutz und zur Vermeidung der Nichtaufklärbarkeit.

Gemäß einer weiteren Ausgestaltung der Erfindung sind die beiden Blendenöffnungen jeweils rechtwinklig ausgebildet und weise eine Breiten- sowie eine Höhenerstreckung auf, wobei die Breitenerstreckung der ersten Blendenöffnung größer ist als die Breitenerstreckung der zweiten Blendenöffnung und die Höhenerstreckung der ersten Blendenöffnung kleiner ist als die Höhenerstreckung der zweiten Blendenöffnung.

Hierbei kann mit weiterem Vorteil vorgesehen sein, dass jede rechtwinklige Blendenöffnung eine obere Begrenzungskante sowie eine untere Begrenzungskante zur Begrenzung des austretenden Lichts nach oben sowie nach unten und eine linke Begrenzungskante sowie eine rechte Begrenzungskante zur beidseitigen Begrenzung des abgestrahlten Lichts aufweist. Zusätzlich ist es zweckmäßig, wenn die beiden Blendenöffnungen untereinander angeordnet sind und jede der beiden Blendenöffnungen symmetrisch zu einer beiden Blendenöffnungen gemeinsamen Symmetrieachse angeordnet ist.

Eine Besonderheit des erfindungsgemäßen Scheinwerfers ist in der einteiligen Leiterplatte zu sehen, die sich in einer zur Lichtabstrahl-Hauptrichtung (nämlich nach vorne aus der Vorderseite des Gehäuses gerichtet) orthogonalen Radialebene erstreckt, in der beide mit den verschiedenen Lichtquellen bestückten Bereiche der Leiterplatte angeordnet sind.

Falls erforderlich und gewünscht, kann der erfindungsgemäße Scheinwerfer ferner eine vierte Gruppe von Lichtquellen aufweisen, die wie die dritte Gruppe von Lichtquellen in dem zweite Bereich der Leiterplatte angeordnet ist und mindestes eine Lichtquelle aufweist. Hierbei ist es zweckmäßig, wenn die mindestens eine Lichtquelle der vierten Gruppe durch die zweite Blendenöffnung gelangendes Licht als Fernlicht abstrahlt, wobei die mindestens eine Lichtquelle der vierten Gruppe Licht im sichtbaren Wellenlängenbereich abstrahlt. Ein derartiger Scheinwerfer gibt also wahlweise Licht von vier verschiedenen Arten ab, nämlich zum einen Abblendlicht und zum anderen Fernlicht, wobei zwei Arten von Abblendlicht, nämlich zum einen Abblendlicht im sichtbaren Wellenlängenbereich und zum anderen Abblendlicht im nicht sichtbaren Wellenlängenbereich abgegeben werden kann und wobei Fernlicht ebenfalls von zweiten Arten abgegeben werden kann, nämlich zum einen Fernlicht im sichtbaren Wellenlängenbereich und zum anderen Fernlicht im nicht sichtbaren Wellenlängenbereich.

Die Erfindung wird nachfolgend anhand eines Ausführungsbeispiels sowie unter Bezugnahme auf die Zeichnung näher erläutert. Im Einzelnen zeigen dabei:
- Fign. 1 und 2: eine perspektivische Ansicht und eine Vorderansicht eines Ausführungsbeispiels eines Fahrzeugscheinwerfers nach der Erfindung,
- Fign. 3 und 4: perspektivische und Vorderansichten des Scheinwerfers gemäß den Fign. 1 und 2 ohne das über die Vorderseite der Blende vorstehende vordere Gehäuseteil,
- Fig. 5: einen Längsschnitt durch das Gehäuse des Scheinwerfers mit Verdeutlichung der Lichtabgabe für Abblendlicht wahlweise im sichtbaren oder nichtsichtbaren Wellenlängenbereich und
- Fig. 6: einen Längsschnitt durch das Gehäuse bei Abgabe von nicht sichtbarem Licht als Fernlicht.

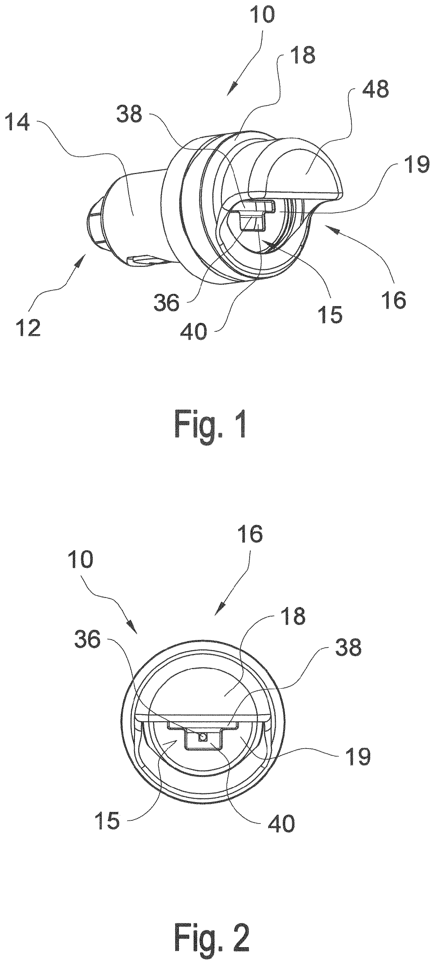

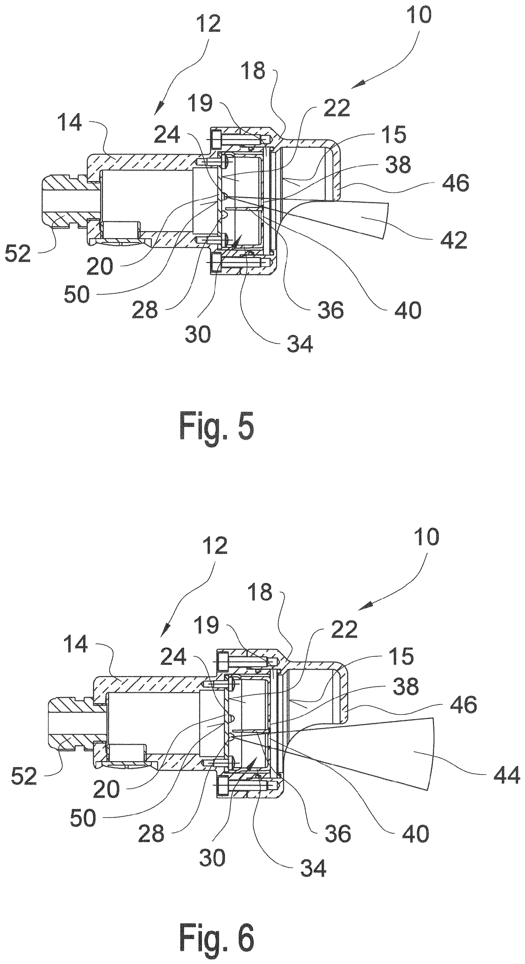

Verschiedene Ansichten auf ein Ausführungsbeispiel eines erfindungsgemäßen Fahrzeugscheinwerfers 10 zeigen die Fign. 1 bis 4. Der Scheinwerfer 10 weist demnach ein Gehäuse 12 (siehe auch die Fign. 5 und 6) auf, das ein erstes im Wesentlichen zylindrisches Gehäuseteil 14 und ein über die Lichtabstrahlfläche 15 an der Vorderseite 16 des Gehäuses 12 überstehendes zweites Gehäuseteil 18 aufweist. An seiner Vorderseite 16 ist das Gehäuse 12 durch eine transparente Scheibe 19 geschlossen.

Innerhalb des Gehäuses 12 befindet sich eine (erste) Leiterplatte 20, auf der neben verschiedenen für den Betrieb des Scheinwerfers erforderlichen elektronischen Bauteilen auch die Lichtquellen dreier Gruppen von Lichtquellen angeordnet sind. Die Leiterplatte 20 ist als Scheibe ausgebildet und an dem bzw. in dem ersten Gehäuseteil 14 beispielsweise durch Schrauben befestigt. Auf der der Vorderseite 16 zugewandten (Vorder-)Seite 22 der Leiterplatte 20 (siehe die Fign. 5 und 6) befinden sich eine erste Lichtquelle 24 der ersten Gruppe, die Licht im sichtbaren Wellenlängenbereich abgibt, sowie eine zweite Lichtquelle 26 einer zweiten Gruppe, die Licht im nicht sichtbaren Wellenlängenbereich abgibt. Diese beiden Lichtquellen bzw. allgemeiner ausgedrückt die Lichtquellen dieser beiden Gruppen befinden sich, bezogen auf die zeichnerischen Darstellungen in den Figuren in der oberen Hälfte nahe der horizontalen Mittellinie der Leiterplatte 20. In der unteren Hälfte der Leiterplatte 20 befindet sich mindestens eine Lichtquelle 28 wiederum für nicht sichtbares Licht. Diese Lichtquelle 28 ist der dritten Gruppe von Lichtquellen zugeordnet. Sämtliche Lichtquellen sind in diesem Ausführungsbeispiel als LEDs ausgeführt.

Vor der Leiterplatte 20 befindet sich in dem ersten Gehäuseteil 14 eine Blende 30, die eine scheibenförmige Blendenplatte 32 aufweist, von der längs ihres Randes eine umlaufende Abstandswand 34 sowie eine Lichtabschottungswand 36 abstehen. Die Lichtabschottungswand 36 endet in geringem Abstand zur Leiterplatte 20 zwischen den jeweils mindestens einen Lichtquellen 24, 26 der ersten und zweiten Gruppe und der mindestens einen Lichtquelle 28 der dritten Gruppe.

Bezogen auf die Darstellungen in der Zeichnung befindet sich direkt oberhalb der Lichtabschottungswand 36 in der Blendenplatte 32 eine erste Blendenöffnung 38 und unterhalb der Lichtabschottungswand 36 eine zweite Blendenöffnung 40. Wie insbesondere anhand der Fign. 5 und 6 zu erkennen ist, dienen die beiden Blendenöffnungen 38, 40 der Beschneidung des von den Lichtquellen abgegebenen Lichts, wobei, wie anhand von Fig. 5 zu erkennen ist, die erste Blendenöffnung 38 dazu vorgesehen ist, Licht der Lichtquellen 24, 26 der ersten beiden Gruppen als Abblendlicht 42 abzustrahlen, während die zweite Blendenöffnung Licht der mindestens einen Lichtquelle 28 der dritten Gruppe als Fernlicht 44 austreten lässt. Anwendungen des Scheinwerfers können ziviler Art und/oder zur Landesverteidigung sein. Im Falle der Abgabe des Abblendlichts 42 sorgt eine weitere Lichtabstrahlbegrenzungskante 46 am zweiten Gehäuseteil 18, die an einem Vorsprungselement 48 des zweiten Gehäuseteils 18 ausgebildet ist, für eine zusätzliche Begrenzung des Abblendlichtkegels nach oben hin. Das nach Art einer (Halb-)Kappe ausgebildete Vorsprungselement 48 dient ferner dem Schutz vor Steinschlag, vor Schlamm und vor Nichtaufklärbarkeit.

Die hauptsächliche Begrenzung der Lichtabstrahlung bei Abblendlicht und bei Fernlicht erfolgt durch die Begrenzungskanten in der Breite und in der Höhe der im Wesentlichen rechteckigen Blendenöffnungen 38, 40.

Im ersten Gehäuseteil 14 befindet sich noch weitere Elektronik auf beispielsweise einer von der Rückseite 50 der Leiterplatte 20 abstehenden weiteren Leiterplatte (nicht gezeigt). In dem ersten Gehäuseteil 14 befindet sich ferner eine in diesem Ausführungsbeispiel axiale Durchführung in Form eines Stutzens 52, an den ein (nicht gezeigtes) Kabel für die Energieversorgung und die Ansteuerung des Scheinwerfers 10 anschließbar ist. Das erste Gehäuseteil 14 kann mit einer Kunststoff-Vergussmasse ausgefüllt sein.

Eine Besonderheit des hier beschriebenen und in der Zeichnung gezeigten Ausführungsbeispiels des Fahrzeugscheinwerfers 10 ist, dass zwei Arten von Abblendlicht abgegeben werden können. So strahlt die mindestens eine Lichtquelle 24 der ersten Gruppe von Lichtquellen Abblendlicht im sichtbaren Wellenlängenbereich aus (sogenanntes Tarnlicht). Die mindestens eine Lichtquelle 26 der zweiten Gruppe von Lichtquellen hingegen strahlt Abblendlicht im nicht sichtbaren Wellenlängenbereich, also beispielsweise im NIR-Wellenlängenbereich ab. Dieses Licht kann durch ein Nachtsichtgerät bzw. eine Nachtsichtbrille für das menschliche Auge sichtbar gemacht werden. Schließlich gibt die mindestens eine Lichtquelle 28 der dritten Gruppe von Lichtquellen Fernlicht im nicht sichtbaren Wellenlängenbereich, beispielsweise ebenfalls im NIR-Wellenlängenbereich ab.

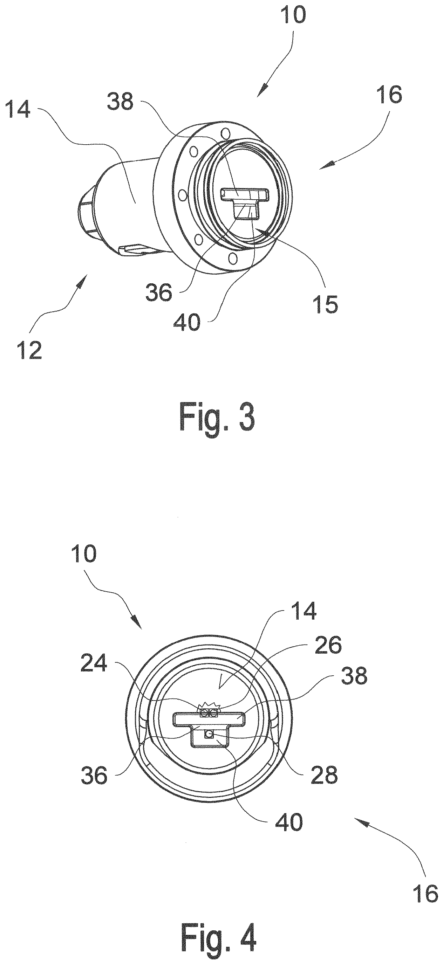

Mindestens eine Lichtquelle einer vierten Gruppe von Lichtquellen kann mit Vorteil neben der Lichtquelle 28 der dritten Gruppe angeordnet sein (nicht gezeigt) und Licht im sichtbaren Wellenlängenbereich abstrahlen, das ebenfalls als Fernlicht durch die zweite Blendenöffnung 40 gelangt. Die beiden Lichtquellen für das Fernlicht sind auch z.B. so, wie für die Lichtquellen 24, 26 der beiden ersten Gruppen von Lichtquellen in Fig. 4 gezeigt, nebeneinander angeordnet sowie unterhalb der Lichtquellen 24, 26 positioniert.

All diese Funktionen sind in kompakter Art und Weise in dem Gehäuse 12 untergebracht, wobei das Gehäuse 12 selbst äußerst kompakt gestaltet ist. Über eine (nicht dargestellte) Halterung lässt sich der Scheinwerfer an beispielsweise dem Stoßfänger eines Fahrzeugs als Frontscheinwerfer anbringen, wobei durch die Art der Ausbildung der Halterung es möglich ist, dass der Scheinwerfer nach oben und unten bzw. nach links und rechts ausgerichtet und dann fixiert werden kann.

### BEZUGSZEICHENLISTE

- 10: Fahrzeugscheinwerfers
- 12: Gehäuse
- 14: erstes Gehäuseteil
- 15: Lichtabstrahlfläche
- 16: Vorderseite des Gehäuses
- 18: zweites Gehäuseteil
- 19: Scheibe
- 20: Leiterplatte
- 22: Vorderseite der Leiterplatte
- 24: erste Lichtquelle
- 26: zweite Lichtquelle
- 28: dritte Lichtquelle
- 30: Blende
- 32: Blendenplatte
- 34: Abstandswand
- 36: Lichtabschottungswand
- 38: erste Blendenöffnung
- 40: zweite Blendenöffnung
- 42: Abblendlicht
- 44: Fernlicht
- 46: Lichtabstrahlbegrenzungskante
- 48: Vorsprungselement
- 50: Rückseite der Leiterplatte
- 52: Stutzen

## Patentansprüche

1. Scheinwerfer für ein Fahrzeug, mit
- einem Gehäuse (12), das eine Vorderseite (16) zur wahlweisen Abgabe von Licht unterschiedlicher Arten aufweist,
- einer einstückigen Leiterplatte (20), die innerhalb des Gehäuses (16) angeordnet ist,
- drei Gruppen von Lichtquellen (24, 26, 28), die auf der Leiterplatte (20) angeordnet sind, wobei jede Gruppe mindestens eine Lichtquelle aufweist,
- wobei eine erste und eine zweite Gruppe von Lichtquellen (24, 26) in einem ersten Bereich der Leiterplatte (20) und eine dritte Gruppe von Lichtquellen (28) in einem zum ersten Bereich benachbarten zweiten Bereich der Leiterplatte (20) angeordnet sind,
- einer Blende (30), die innerhalb des Gehäuses (12) zwischen der Leiterplatte (20) und der Vorderseite (16) des Gehäuses (12) angeordnet ist und zwei Blendenöffnungen (38, 40) aufweist,
- wobei eine erste Blendenöffnung (38) den jeweils mindestens einen Lichtquellen (24, 26) der ersten und der zweiten Gruppe zugeordnet ist, deren Licht durch die erste Blendenöffnung (38) gelangt und austritt,
- wobei eine zweite Blendenöffnung (40) der mindestens einen Lichtquelle (28) der dritten Gruppe zugeordnet ist, deren Licht durch die zweite Blendenöffnung (40) gelangt und austritt, und
- einer Lichtabschottungswand (36), die den Raum des Gehäuses (12) zwischen der Leiterplatte (20) und der Blende (30) in einen ersten Teilraum, in dem die jeweils mindestens einen Lichtquellen (24, 26) der ersten und der zweiten Gruppe sowie die erste Blendenöffnung (38) angeordnet sind, und einen zweiten Teilraum unterteilt, in dem die mindestens eine Lichtquelle (28) der dritten Gruppe und die zweite Blendenöffnung (40) angeordnet sind.

2. Scheinwerfer nach Anspruchs 1, **dadurch gekennzeichnet, dass** die beiden Blendenöffnungen (38, 40) beidseitig der Lichtabschottungswand (36), z.B. oberhalb und unterhalb der Lichtabschottungswand (36) angeordnet sind.

3. Scheinwerfer nach Anspruch 1 oder 2, **dadurch gekennzeichnet, dass** die Lichtabschottungswand (36) von der der Leiterplatte (20) zugewandten Innenseite der Blende (30) absteht.

4. Scheinwerfer nach einem der Ansprüche 1 bis 3, **dadurch gekennzeichnet, dass** die Blende (30) eine die beiden Blendenöffnungen (38, 40) aufweisende Blendeplatte (32) aufweist, von deren Außenrand eine umlaufende Abstandswand (34) absteht, deren der Blendenplatte (32) angewandter Rand zur Vorgabe des Abstandes der Blendenplatte (32) von den Lichtquellen (24, 26, 28) der drei Gruppen an der Leiterplatte (20) anliegt.

5. Scheinwerfer nach einem der Ansprüche 1 bis 4, **dadurch gekennzeichnet, dass** die mindestens eine Lichtquelle (24) der ersten Gruppe Licht im sichtbaren Wellenlängenbereich abgibt und dass die jeweils mindestens einen Lichtquellen (26, 28) der zweiten und der dritten Gruppe Licht im unsichtbaren Wellenlängenbereich, insbesondere im NIR-Wellenlängenbereich abgeben.

6. Scheinwerfer nach einem der Ansprüche 1 bis 5, **dadurch gekennzeichnet, dass** die jeweils mindestens einen Lichtquellen (24, 26) der ersten und der zweiten Gruppe durch die erste Blendenöffnung (38) gelangendes Licht als Abblendlicht (42) abgeben und dass die mindestens eine Lichtquelle (28) der dritten Gruppe durch die zweite Blendenöffnung (40) gelangendes Licht als Fernlicht (44) abgibt.

7. Scheinwerfer nach einem der Ansprüche 1 bis 6, **dadurch gekennzeichnet, dass** die beiden Blendenöffnungen (38, 40) abgestrahltes Licht der Lichtquellen (24, 26, 28) der drei Gruppen zur Abgabe ausschließlich in den vor der Vorderseite (16) des Gehäuses (12) liegenden unteren Halbraum gelangen lassen.

8. Scheinwerfer nach Anspruch 7, **gekennzeichnet durch** eine weitere Lichtabstrahlbegrenzungskante (46), die an einem Vorsprungselement (48) ausgebildet ist, das von der Vorderseite (16) des Gehäuses (12) absteht.

9. Scheinwerfer nach Anspruch 8, **dadurch gekennzeichnet, dass** die weitere Lichtabstrahlbegrenzungskante (46) mit einer oberen Begrenzungskante der ersten Blendenöffnung (38) im Wesentlichen fluchtet.

10. Scheinwerfer nach einem der Ansprüche 1 bis 9, **dadurch gekennzeichnet, dass** die beiden Blendenöffnungen (38, 40) jeweils rechtwinklig ausgebildet sind und eine Breiten- sowie eine Höhenerstreckung aufweisen, wobei die Breitenerstreckung der ersten Blendenöffnung (38) größer ist als die Breitenerstreckung der zweiten Blendenöffnung (40) und die Höhenerstreckung der ersten Blendenöffnung (38) kleiner ist als die Höhenerstreckung der zweiten Blendenöffnung (42).

11. Scheinwerfer nach Anspruch 10, **dadurch gekennzeichnet, dass** jede rechtwinklige Blendenöffnung (38, 40) eine obere Begrenzungskante sowie eine untere Begrenzungskante zur Begrenzung des austretenden Lichts nach oben sowie nach unten und eine linke Begrenzungskante sowie eine rechte Begrenzungskante zur beidseitigen Begrenzung des abgestrahlten Lichts aufweist.

12. Scheinwerfer nach Anspruch 10 oder 11, **dadurch gekennzeichnet, dass** die beiden Blendenöffnungen (38, 40) untereinander angeordnet sind und jede der beiden Blendenöffnungen (38, 40) symmetrisch zu einer beiden Blendenöffnungen (38, 40) gemeinsamen Symmetrieachse angeordnet ist.

13. Scheinwerfer nach einem der Ansprüche 1 bis 12, **gekennzeichnet durch** eine vierte Gruppe von Lichtquellen, die wie die dritte Gruppe von Lichtquellen (28) in dem zweite Bereich der Leiterplatte (20) angeordnet ist und mindestes eine Lichtquelle aufweist.

14. Scheinwerfer nach Anspruch 13, **dadurch gekennzeichnet, dass** die mindestens eine Lichtquelle der vierten Gruppe durch die zweite Blendenöffnung (40) gelangendes Licht als Fernlicht abstrahlt, wobei die mindestens eine Lichtquelle der vierten Gruppe Licht im sichtbaren Wellenlängenbereich abstrahlt.

15. Fahrzeug mit einem Scheinwerfer nach einem der vorhergehenden Ansprüche.
